# EUROPEAN PATENT SPECIFICATION

(11) **EP 1 843 930 B1**
(45) Date of publication and mention of the grant of the patent: **08.06.2011**
(21) Application number: 06704602.9
(22) Date of filing: 02.02.2006
(51) Int. Cl.: B62B 3/14, A47F 10/04

(54) **A SYSTEM OF LOCKING AND COVERING SHOPPING CARTS**
SYSTEM ZUR VERRIEGELUNG UND ABDECKUNG VON EINKAUFSWAGEN
SYSTEME POUR VERROUILLER ET RECOUVRIR DES CHARIOTS D'ACHAT

(30) Priority: 04.02.2005 DK 200500179
(43) Date of publication of application: 17.10.2007
(73) Proprietor: Alert Metalguard ApS, 1552 Copenhagen V (DK)
(72) Inventor: SØRENSEN, Søren, I-22020 Fagetto Lario (IT)
(74) Representative: Sundien, Thomas
(86) International application number: PCT/DK2006/000056
(87) International publication number: WO 2006/081821

(56) References cited:
- AU-B2- 573 775
- US-A- 3 994 505
- US-A- 5 271 634

## Description

The invention relates to a system of locking and covering shopping carts which are upwardly open, which system comprises: a first part comprising a top part and a frame, said top part being configured for covering a first section of the upper portion of a shopping cart positioned in the system, and said frame being configured for enclosing and securing the upper portion of a number of the sides of the shopping cart in such a manner that the shopping cart thus secured can be released essentially only by movement in a direction towards a non-secured side of the shopping cart; and another part for substantially covering, in an active position, the upper portion of the shopping cart in order to thereby prevent access to the interior of the shopping cart.

Businesses or shops are widely opposed to allowing filled shopping carts access into the shop premises. To the customers who have left one shop with a filled shopping cart, it often means that they are denied access to other shops unless they leave the shopping with its contents outside. This is unsatisfactory to both customers and shops since the customers' shopping in a number of consecutive shops is thereby made difficult and their shopping is reduced accordingly.

There is therefore a need for systems that ensure that customers may safely leave their filled shopping carts outside shops.

Australian patent disclosure No. AU-B-38072/85 discloses all the features of the preamble of independent claim 1 and teaches a system for locking shopping carts by means of a two-part grid which covers the top and the upper portions of the sides of a shopping cart arranged therein. The cart is located in the grid by the front edge of the cart being first driven below the one part which comprises a fixated, horizontal plate, following which the other part is tilted downwards and located across the rear of the shopping cart.

Locking of the other part of the system takes place either by means of a brought-along padlock or by means of an integral key-locking mechanism. There is consequently a risk of the customers losing (being unable to find) the keys and of their purchases being unintentionally locked. The system with the two grids also consumes much space in the store premises, which is, of course, undesired. Moreover, the Australian system does not allow for adjustment and hence it is to be tailor-made in response to the shopping carts for which it is to be used.

The object of the invention is to provide a less space-consuming system for locking shopping carts.

This is accomplished by the system mentioned above comprising means for pulling out the second part from a first inactive position to said active second position; and by said system comprising means for locking the second part in a given position and means for securing the shopping cart in relation to the second part.

Advantageous embodiments will appear from the dependent claims.

The invention will now be explained in further detail with reference to the drawing, wherein
Figure 1 is a perspective view of two systems for locking and covering shopping carts;
Figure 2 is a perspective view of a system in which a shopping cart is secured;
Figure 3 shows three different kinds of suspension for a system for locking and covering shopping carts; and
Figure 4 shows an exploded view of a system for locking and covering shopping carts.

Today theft protection of goods, eg in warehouses or supermarkets, is widely performed by means of marking of the individual goods. It may be eg a colour cartridge which is fastened to the commodities and which requires a particular device in order for it to be released again without the colour being released. However, it could also be eg a coil, a magnet or even a radio transmitter which is so small that it can be made as a sticker and possessing the particular property that it is able to accommodate, without a battery, information which is released when it is caused to move past a magnetic field or is exposed to a radio signal. Such marking of each individual commodity in eg a supermarket by such means also enables registration whether commodities not paid for pass by selected locations. This is typically done at the tills/cash registers or the shop exits as such. However, professional thieves have long known that any electronic theft protection of commodities can be circumvented by shielding the stolen goods from the surroundings by means of a radiation shield, a so-called "Faraday cage" which neutralizes all electrical influences coming from the outside. Usually this is quite simply accomplished by a carrier bag, a rucksack or a bag being insulated with an interior layer of a conductive material, such as eg tin foil; however, in principle any conductive material can be used. Such insulated container effectively prevents any detection of marked goods therein and thus also prevents discovery of stolen goods that are contained in the insulated container; and it follows that these insulated containers, often referred to as "booster bags", are also the direct cause of a considerable waste of commodities in ia the detail trade. Therefore, today sensors have been introduced that are capable of detecting such "booster bags", and today effective commodity protection consists of both detectors for detecting marked goods and detectors for detecting "booster bags". However, a common shopping cart of steel also constitutes a Faraday cage, and it follows that shopping carts are not only a source of errors originating from the sensors detecting the "booster bags", they also constitute in themselves an effective barrier against electronic detection of stolen goods, if any, accommodated in the cart. Therefore shops are fiercely opposed to allowing filled shopping carts to enter. To the customers who have left one shop, bringing along a filled shopping cart, it often means that they are denied access to other shops unless they leave the filled shopping cart outside. This is unsatisfactory to both customers and shops, since it makes it difficult for the customers to do their shopping and hence to a wide extent reduces their shopping in a number of consecutive shops.

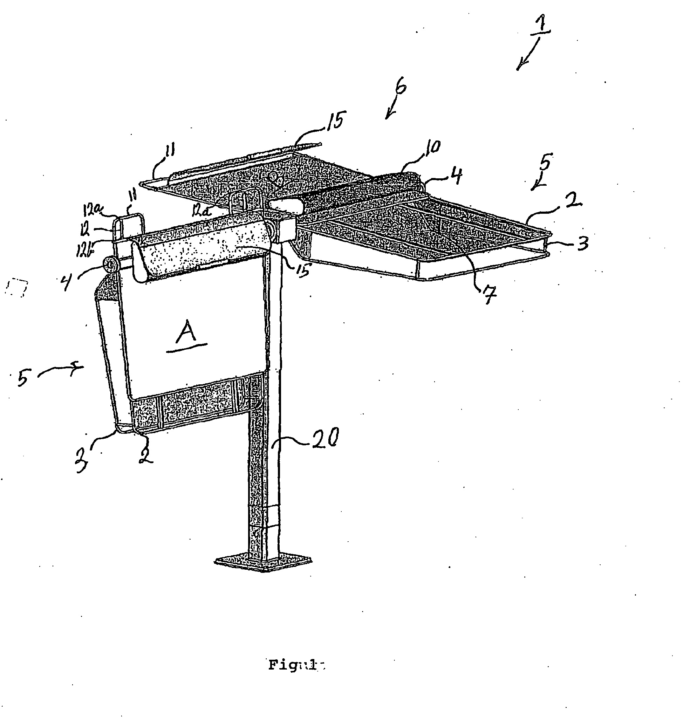

Figure 1 shows two identical systems for locking and covering shopping carts. In the shown embodiment two identical systems 1 are shown arranged to each their side of a post 20.

Each of the systems comprises: a first part 5 comprising a top part 7 and a frame 2, which top part 7 is configured for covering a first section of a shopping cart located in the system 1, and which frame 2 is configured for enclosing and securing the upper portion of a number of the sides of a shopping cart whereby a shopping cart thus secured can be released essentially only by movement in a direction towards a non-secured side; and a second part 6 for essentially covering the remaining upper portion of the shopping cart in order to thereby prevent access to the interior of the shopping cart.

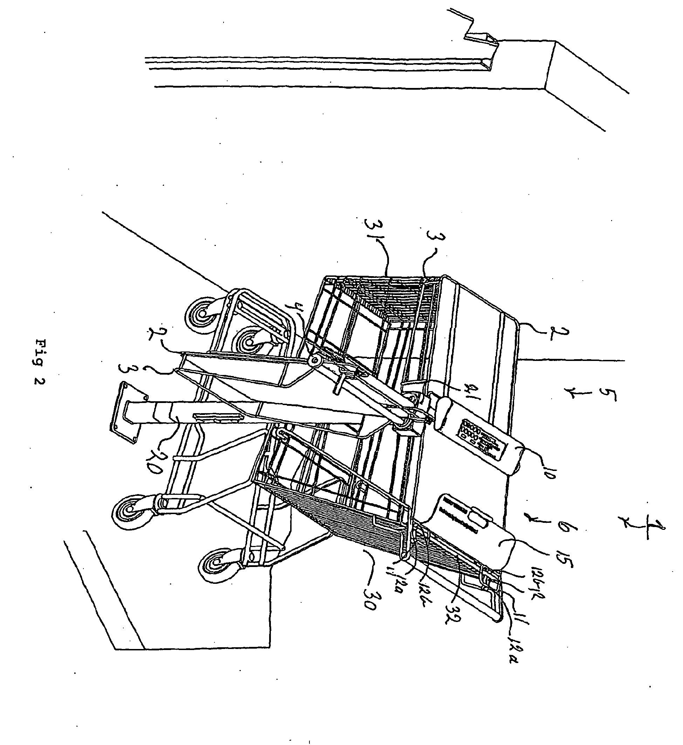

The system, designated by A to the left in the figure, is shown in its inactive position, while the system, designated by B to the right in the figure, is, for illustrative purposes, shown in the position it would occupy of a shopping cart (shown in Figure 2) were secured underneath it.

Each of the two systems shown in Figure 1 comprises two parts, wherein the first part 5 (in the following also designated the frame part) is intended for being secured across the front part of a shopping cart, and the second part 6 is intended for being secured across the rear part of a shopping cart; however, while the part 6 comprises a roller-blind-like part or a plate which is shifted telescopically in and out below the first part 5, the first part 5 comprises a frame-like structure 2 with a cladding 7 which may comprise eg a rigid plate or a cloth/tissue.

The frame-like structure 2 comprises a section 3 which is intended for engaging around the sides of a shopping cart located in the system. Thereby it is ensured that the shopping cart cannot be twisted out of engagement. It is further ensured by the frame 2, as shown in the figures, that a shopping cart located therein can be released only by rolling backwards.

It is realised with the invention that it is possible to use that feature to advantage In that the system comprises means 4 for pulling in and out the second part 6 between an inactive position, where the second part 6 is pulled in to an active position in which it covers the remainder of the upper portion of a shopping cart located in the system; and that the system 1 comprises means for locking the other part 6 in a given position and means 12 for securing the shopping cart 30 in relation to the second part 6.

The pull mechanism is preferably spring-biased to the effect that the second part 6 will seek towards a position in which it is pushed in (as shown to the left in Figure 1). However, it may also be automated by means of an electric motor for pulling the second part 6 in and/or out.

The frame-like structure 5, 2 may advantageously be hinged or journalled such that it is able to at least tilt between a position in which it hangs down as shown to the left in Figure 1 and a position in which it is horizontal as shown to the right in Figure 1. Particularly easy mounting of the system 1 is accomplished if the system is provided with a shaft 4 which is rotatably mounted and dismountable in a bearing in the post 20. Obviously, however, any other tilting/bearing mechanism known to the skilled person can be used, eg the shaft 4 may comprise an interior bearing mechanism.

The first part 5 of the system 1 is hinged around a shaft 4, whereby it is able to swing from a position in which it hangs approximately vertically down, as shown to the left in Figure 1, to a position in which the part 5 is approximately horizontal, as shown in the exemplary embodiment shown to the right in the figure. On top of the shaft 4, a keyboard (subject to description below) 10 for activating and operating the system 1 is arranged.

The pull-out part 6 of the securing system can advantageously be provided with a flange 15 which may both serve as handle when the part 6 is to be pulled out, and which may also cover the keyboard 10 and hence protect against eg vandalism when the system is not in use (as shown to the left in the figure). Moreover such flange may also be used for advertising purposes as outlined in Figure 2.

The other part 6 of the system 1 is further provided with a brace 11, to which, at 12a, a hook-like part 12 is provided that has a free end 12b intended for engagement with the rear part of a shopping cart. The function of this hook-like part will be described later.

According to one embodiment the pull-out part 6 comprises a bendable/flexible woven cloth or tissue which may advantageously be mounted on a known, but not shown automatic roller-blind-like winding mechanism at or around the shaft 4. The winding mechanism is preferably spring-biased to the effect that the cloth winds itself up when the system is not in use. However, it may also be provided with an electro-motor for winding up or withdrawal of the cloth. Thereby a flexible system is accomplished which can be adapted to shopping carts heaving different dimensions, since - quite simply - the cloth/tissue is pulled more or less out of the winding mechanism in response to the size of the shopping cart. Moreover, the flexibility of such cloth is associated with the advantage that it can compensate for a slight overfilling of the cart and still provide full protection against theft of the contents of the shopping cart. If a wound cloth is used as pull-out part 6, one must bear in mind that the rotating movement of the frame part is to be limited such that the frame part 5 is prevented from being lifted (rotated) and hence give access to the contents of a shopping cart arranged there below. Such limitating/blocking mechanism (not shown in the figures) can advantageously be incorporated in the bearings about which the shaft 4 rotates, but it may also be configured on the first part 5 as locking means for engagement with a shopping cart or its grid; and the shopping carts may also be provided with locking means for engagement with the first part 5 or its frame-like structure 2. The rotation of the first part 5 may, of course, also be limited by an outer stop arranged at a suitable height above the first part 5.

A cloth/tissue or a canvas for use on the pull-out part 6 and/or the frame part 5 may advantageously be woven with electrically conducting fibres laid in, including also electrically conducting plastics fibres. Thereby ruptures of those fibres - because of a knife, vandalism or the like - can be detected by continuous measurement of the electric resistance in the cloth. It is thus an option to incorporate an alarm which is actuated when theft of the contents of the cart is attempted, eg when the cloths are cut. Such alarm device can be incorporated such that it uses the electronic device which also controls the locking mechanisms to advantage, or the alarm may be an additional unit that may even be monitored centrally via the security system of a shopping mall. Besides, the terms "cloth" or "canvas" are not intended to designate that the material needs to be woven or spun or that it is to be made of textile for that matter. All it takes is that it must provide the requisite flexibility/pliability, while simultaneously it must be able to provide a barrier against the interior of the shopping cart. Also, the frame part 5 does not necessarily have to comprise a plate or a cloth; rather it may also comprise a grid as described in the above-referenced Australian patent disclosure.

Albeit the system is shown with a floor-mounted post 20, obviously the post 20 may just as well be mounted in a ceiling structure, le from above and downwards.

Figure 2 shows a system 2 in which a shopping cart 30 is secured. The shopping cart 30 is arranged in the system 1 by the front end 31 of the cart 30 being rolled below the frame part 5. The system shown in Figure 2 comprises two hook-like locking systems 12, and the shopping cart 30 is secured in the system in that the pull-out part 6 is secured by means of the hook 12 in engagement with a bar 32.

If the pull-out part 6 is configured as a cloth, the locking mechanism may advantageously be incorporated in an automated winding device, around which the cloth in the first part 6 is wound, and further advantageously the locking mechanism may be an electronically controlled lock. If particularly good protection is desired, the winding mechanism can be made automatic and controlled such that, following actuation of the electronic lock, tightening of the cloth by means of the automatic winding device takes place first, following which the winding device locks its position, until unlocking takes place. Obviously, however, other types of fastening can be used; the only thing the attachment is to actually ensure is that the rear end of the second part 6 (the one at the flange) cannot be released from the shopping cart when the cloth 6 is stretched.

If pulling out of the pull-out part 6 of the system is not enabled by a cloth which is wound, but conversely by a (rigid) telescopic device such as eg a plate which can be shifted in an out underneath the top of the first part 6, the locking device may comprise pins, teethed wheels or other suitable measures which may be caused to engage lockingly. Moreover, by a telescopic device as described above it is no longer strictly necessary for the adjustable part to comprise a decided hook device 12, since the rigidity of such telescopic device means that any mechanism, as long as it engage somewhere at the rear of the cart, will be suitable.

According to an embodiment of the invention the electronic locking mechanism is configured such that, following actuation from the keyboard 10, it allows pulling out (fastening) of the second part 6 for a predetermined time interval which experience has shown to be suitable for the pulling out and attachment of eg a hook device 12, following which the locking device locks.

According to a further embodiment of the invention, the locking mechanism constitutes an electronically controlled winding mechanism which is activated by means of the keyboard 10. The electronic locking mechanism may advantageously be made (as shown in the drawing) in the form of a keyboard-operated system, where the keyboard comprises a numerical keyboard and respective keys for accepting or cancelling entries.

The electronic system may be actuated eg by means of a four-digit self-selected code which is repeated and subsequently activated when the accept key is pushed. When the system is activated the wound-up part 6 can be moved until the system is locked again, either by means of a timed locking device or entry of a locking command on the keyboard, following which the flexible part cannot be moved unit either the correct, self-selected four-digit code or a standard code (eg a 12-digit code) known only by eg trusted shop personnel is entered.

Moreover an electronic locking system may also have a delayed-action mechanism, whereby locked carts are released automatically at closing time.

In order to prevent abuse (such as eg pranks) where empty carts or carts with undesirable contents are locked, the electronic system may also be remote-operated to the effect that the locking system cannot be used until eg a remote-controlled acceptance or activation from eg a shop has occurred. Thereby the individual shop which may have invested money in the system may also have a guarantee that the system is used only by customers approved by it.

Finally, an electronic system makes it possible to deploy a central unit for handling many systems for locking shopping carts.

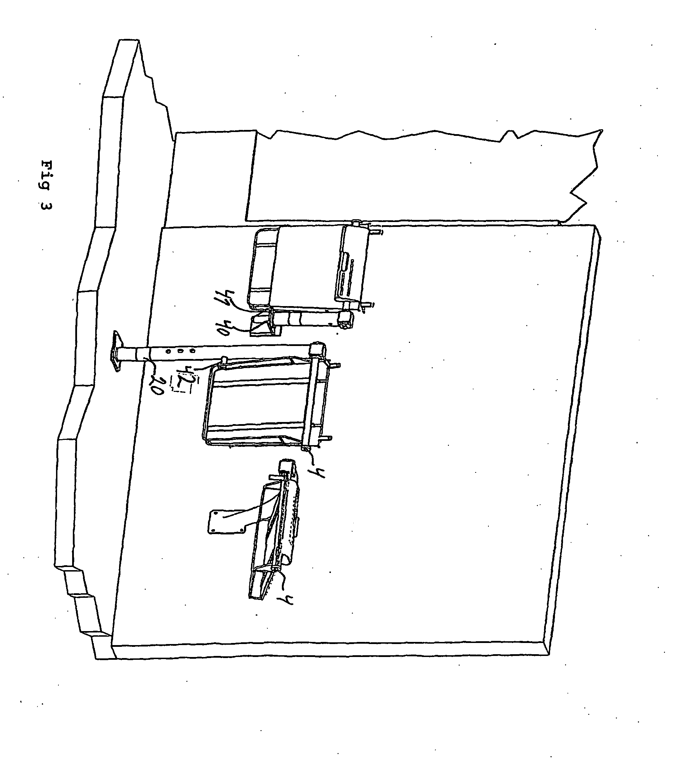

Figure 3 shows how the system can be secured to a wall and a floor, respectively. To the left in the figure, a system 1 is shown, which system is dismountably journalled in a fitting 40 in which the system can be turned by means of a bearing 41. Thereby the system can, when not in use, be turned towards a wall and hence occupy a minimum of space.

Centrally in Figure 3, a system is shown which, in principle, is the same as the system shown in Figure 1, but wherein, however, it is possible to lock a shopping cart to the one side of the post (20) (to the right in the figure). Moreover the second rotatably journalled part 6 is provided with a locking mechanism, such as eg a latch 42 which can be shifted into the post 20. By providing the system with such a device for locking rotatably journalled part 6, any vandalism where it is attempted to kick the part 6 around is prevented.

Albeit the locking mechanism 42 is described as a latch extending from the pivotal part 6 of the system, other methods may obviously be used, including eg a latch extending from the post. The junction of the latch can also be coordinated with the electronic keyboard 10 or other functional input, thereby motorising, activating or deactivating the latch electrically (it is automatically pushed in and out) and thereby cooperating with the remainder of the system.

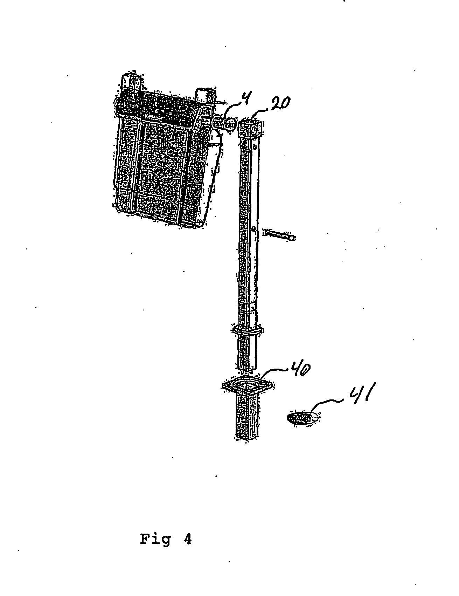

Figure 4 is an exploded view of one embodiment of a system for locking and covering shopping carts. As shown the system may advantageously be dismounted at the floor by the post 20 being quite simply pulled up, following which a cover plate 41 can e laid across the hole 40 left by the post 20. Moreover the shaft 4 can advantageously be configured with means allowing dismounting from the post. Thereby the systems can be collected with or without posts, eg in the evening. A thus dismounted and released system occupies markedly less space than other known systems, and therefore a considerable number can easily be collected by one person. The dismountable system may advantageously contain means, such as eg locking devices that prevent "unauthorised" dismounting.

Besides, the electronic system may comprise a system which is able to detect and/or read and store information on fingerprints. Thereby the locks can be activated eg via a fingerprint, whereby a user of the system 1 first secures his shopping cart and then locks the system by means of his fingerprint, whose data are stored by the system. Now, the system does not release the shopping cart until the same fingerprint is yet again detected and/or read. Of course, such system may still contain a safety device meaning that locked carts can still be released in an emergency situation.

## Claims

1. A system for locking and covering shopping carts (30) which are upwardly open, which system comprises:
• a first part (5) comprising a top part (7) and a frame (2), said top part (7) being configured for covering a first section of the upper portion of a shopping cart (30) positioned in the system (1), and said frame (2) being configured for enclosing and securing the upper portion of a number of the sides of the shopping cart (30) in such a manner that the shopping cart (30) thus secured can be released essentially only by movement in a direction towards a non-secured side of the shopping cart (30); and
• a second part (6) for substantially covering, in an active position, the upper portion of the shopping cart in order to thereby prevent access to the interior of the shopping cart,
**characterised in that** the system (1) comprises means (4) for pulling out the second part (6) from a first inactive position to said active second position and that the system (1) comprises means for locking the second part (6) in a given position, and mean (12) for securing the shopping cart in relation to the second part (6).

2. A system for locking and covering upwardly open shopping carts (30) in accordance with claim 1, **characterised in that** the second part (6) is pulled out in essentially the same direction as the one in which a secured shopping cart is to be released from the frame (2).

3. A system for locking and covering upwardly open shopping carts (30) in accordance with claim 1 or 2, **characterised in that** the first part (5) comprises a journalling for the second part (6).

4. A system for locking and covering upwardly open shopping carts (30) in accordance with claims 1-3, **characterised in that** the second part (6) comprises a pull-out plate or a pull-out grid.

5. A system for locking and covering upwardly open shopping carts (30) in accordance with claims 1-3, **characterised in that** the second part (6) comprises a pull-out cloth.

6. A system for locking and covering upwardly open shopping carts (30) in accordance with claims 1-5, **characterised in that** the first part (5) is rotatably journalled by means of a shaft (4).

7. A system of locking and covering upwardly open shopping carts (30) in accordance with any one of claims 1-6, **characterised in that** the first part (5) is rotatably journalled by means of a shaft (4) allowing rotation of the first part (5) from an essentially vertical position to an essentially horizontal position; and that the system also comprises means for limiting the rotation.

8. A system for locking and covering upwardly open shopping carts (30) in accordance with any one of claims 1-7, **characterised in that** the means for locking the second part (6) in a given position can be activated and deactivated via an electronic unit with a keyboard (10).

9. A system for locking and covering upwardly open shopping carts (30) in accordance with claim 8, **characterised in that** the second part (6) comprises a flange (15) serving, on the one hand, as a handle and, on the other, serving to cover the keyboard (10).

10. A system for locking and covering upwardly open shopping carts (30) in accordance with claims 8 or 9, **characterised in that** the means for locking the second part (6) in a given position comprises a timed release mechanism.

11. A system for locking and covering upwardly open shopping carts (30) in accordance with any one of claims 1-10, **characterised in that** the first part (5) comprises electrically conducting fibres, in particular electrically conducting plastics fibres.

12. A system for locking and covering upwardly open shopping carts (30) in accordance with any one of claims 5-11, **characterised in that** the cloth of the second part (6) comprises electrically conducting fibres, in particular electrically conductive plastics fibres.

13. A system for locking and covering upwardly open shopping carts (30) in accordance with any one of claims 5-11, **characterised in that** the first part (5) and the second part (6) comprises cloth with electrically conducting fibres incorporated, in particular electrically conducting plastics fibres.

14. A system for locking and covering upwardly open shopping carts (30) in accordance with any one of claims 5-11, **characterised in that** the first part (5) and the second part (6) are releasably mounted onto a post (20).

## Patentansprüche

1. System zur Verriegelung und Abdeckung von nach oben offenen Einkaufswagen (30), weiches System umfasst:
• ein erstes Teil (5) umfassend ein oberes Teil (7) und ein Gestell (2), wobei das obere Teil (7) zur Abdeckung eines ersten Abschnittes des oberen Anteils eines im System (1) positionierten Einkaufswagens (30) ausgebildet ist, und wobei das Gestell (2) zum Umgeben und Fixieren des oberen Anteils von einer Anwahl der Seiten des Einkaufswagens (30) derart ausgebildet ist, dass der somit fixierte Einkaufswagen (30) im Wesentlichen lediglich durch eine Bewegung in eine Richtung auf eine nicht fixierte Seite des Einkaufswagens (30) freigegeben werden kann; und
• ein zweites Teil (6) im Wesentlichen zur Abdeckung des in einer aktiven Position befindlichen oberen Anteils des Einkaufswagens, um somit einen Zugang zum Inneren des Einkaufswagens zu verhindern,
**dadurch gekennzeichnet, dass** das System (1) Mittel (4) zum Ausziehen des zweiten Teils (6) aus einer ersten inaktiven Position in die aktive zweite Position umfasst, und das das System (1) Mittel zur Verriegelung des zweiten Teils (6) in einer gegebenen Position und Mittel (12) zum Fixieren des Einkaufswagens relativ zum zweiten Teil (6) umfasst.

2. System zur Verriegelung und Abdeckung von nach oben offenen Einkaufswagen (30) nach Anspruch 1, **dadurch gekennzeichnet, dass** das zweite Teil (6) in die im Wesentlichen gleiche Richtung ausgezogen wird wie die Richtung, in welcher ein fixierter Einkaufswagen vom Gestell (2) freigegeben werden soll,

3. System zur Verriegelung und Abdeckung von nach oben offenen Einkaufswagen (30) nach Anspruch 1 oder 2, **dadurch gekennzeichnet dass** das erste Teil (5) eine Lagerung für das zweite Teil (6) umfasst.

4. System zur Verriegelung und Abdeckung von nach oben offenen Einkaufswagen (30) nach den Ansprüchen 1 bis 3, **dadurch gekennzeichnet, dass** das zweite Teil (6) eine herausziehbare Platte oder ein herausziehbares Gitter umfasst

5. System zur Verriegelung und Abdeckung von nach oben offenen Einkaufswagen (30) nach den Ansprüchen 1 bis 3, **dadurch gekennzeichnet, dass** das zweite Teil (6) ein herausziehbares Tuch umfasst.

6. System zur Verriegelung und Abdeckung von nach oben offenen Einkaufswagen (30) nach den Ansprüchen 1 bis 5, **dadurch gekennzeichnet, dass** das erste Teil (5) mittels einer Welle (4) drehbar gelagert ist.

7. System zur Verriegelung und Abdeckung von nach oben offenen Einkaufswagen (30) nach einem der Ansprüche 1 bis 6, **dadurch gekennzeichnet, dass** das erste Teil (5) mittels einer Welle (4) drehbar gelagert ist, wodurch eine Drehbewegung des ersten Teils (5) aus einer im Wesentlichen vertikalen Position in eine im Wesentlichen horizontale Position ermöglicht wird, und dass das System ferner Mittel zur Abgrenzung der Drehbewegung umfasst.

8. System zur Verriegelung und Abdeckung von nach oben offenen Einkaufswagen (30) nach einem der Ansprüche 1 bis 7, **dadurch gekennzeichnet; dass** die Mittel zur Verriegelung des zweiten Teils (6) in einer gegebenen Position durch eine elektronische Einheit mit eher Tastatur (10) aktivier- und deaktivierbar sind,

9. System zur Verriegelung und Abdeckung von nach oben offenen Einkaufswagen (30) nach Anspruch 8, **dadurch gekennzeichnet, dass** das zweite Teil (6) einen Flansch (15) umfasst, welcher zum einen als Griff und zum zweiten als Abdeckung der Tastatur (10) dient.

10. System zur Verriegelung und Abdeckung von nach oben offenen Einkaufswagen (30) nach den Ansprüchen 8 oder 9, **dadurch gekennzeichnet, dass** die Mittel zur Verriegelung des zweiten Teils (6) in einer gegebenen Position einen zeitlichen Freigabemechanismus umfasst.

11. System zur Verriegelung und Abdeckung von nach oben offenen Einkaufswagen (30) nach einem der Ansprüche 1 bis 10, **dadurch gekennzeichnet, dass** das erste Teil (5) elektrisch leitende Fasern, insbesondere elektrisch leitende Kunststofffasern, umfasst.

12. System zur Verriegelung und Abdeckung von nach oben offenen Einkaufswagen (30) nach einem der Ansprüche 5 bis 11, **dadurch gekennzeichnet, dass** das Tuch des zweiten Teils (6) elektrisch leitende Fasern, insbesondere elektrisch leitende Kunststofffasern, umfasst.

13. System zur Verriegelung und Abdeckung von nach oben offenen Einkaufswagen (30) nach einem der Ansprüche 5 bis 11, **dadurch gekennzeichnet, dass** das erste Teil (5) und das zweite Teil (6) ein Tuch mit eingebundenen elektrisch leitenden Fasern, insbesondere elektrisch leitenden Kunststofffasern, umfassen.

14. System zur Verriegelung und Abdeckung von nach oben offenen Einkaufswagen (30) nach einem der Ansprüche 5 bis 11, **dadurch gekennzeichnet, dass** das erste Teil (5) und das zweite Teil (6) an einem Pfosten (20) lösbar montiert sind.

## Revendications

1. Système pour verrouiller et recouvrir les chariots d'achat (30) qui sont ouverts vers le haut, système qui comprend:
• une première partie (5) comprenant une partie supérieure (7) et un cadre (2), ladite partie supérieure (7) étant configuré pour couvrir une première section de la partie supérieure d'un chariot d'achat (30) placé dans le système (1), et ledit cadre (2) étant configuré pour entourer et fixer la partie supérieure d'un nombre des côtés du chariot d'achat (30) de façon que le chariot d'achat (30) ainsi fixé puisse être libéré essentiellement seulement par le mouvement dans une direction vers un côté non-fixé du chariot d'achat (30): et
• une deuxième partie (6) pour couvrir, dans une position active, essentiellement la partie supérieure du chariot d'achat afin d'empêcher ainsi l'accès à l'intérieur du chariot d'achat,
**caractérisé en ce que** le système (1) comprend des moyens (4) pour retirer la deuxième partie (6) depuis une première position inactive à ladite deuxième position active ;
et que le système (1) comprend des moyens pour le verrouillage de la deuxième partie (6) dans une position donnée, et des moyens (12) pour fixer le chariot d'achat par rapport à la deuxième partie (6).

2. Système pour verrouiller et recouvrir les chariots d'achat (30) qui sont ouverts vers le haut selon la revendication 1, **caractérisé en ce que** la deuxième partie (6) est retirée dans essentiellement la même direction que celle dans laquelle un chariot d'achat fixé doit être libéré du cadre (2),

3. Système pour verrouiller et recouvrir les chariots d'achat (30) sont ouverts vers le haut selon la revendication 1 ou 2, **caractérisé** et ce que la première partie (5) comprend un palier pour la deuxième partie (6).

4. Système pour verrouiller et recouvrir les chariots d'achat (30) qui sont ouverts vers le haut selon des revendications 1 à 3, **caractérisé en ce que** la deuxième partie (8) comprend une plaque de retirement ou une grille de retirement.

5. Système pour verrouiller et recouvrir les chariots d'achat (30) qui sont ouverts vers le haut selon des revendications 1 à 3, **caractérisé en ce que** la deuxième partie (6) comprend un tissu de retirement.

6. Système pour verrouiller et recouvrir les chariots d'achat (30) qui sont ouverts vers le haut selon des revendications 1 à 5, **caractérisé en ce que** la première partie (5) est montée sur palier de manière rotative à l'aide d'un arbre (4),

7. Système pour verrouiller et recouvrir les chariots d'achat (30) qui sont ouverts vers le haut selon l'une quelconque des revendications 1 à 6, **caractérisé en ce que** la première partie (5) est montée sur palier de manière rotative à l'aide d'un arbre (4) permettant la rotation de la première partie (5) depuis une position essentiellement verticale à une position essentiellement horizontale; et que le système également comprend des moyens pour limiter la rotation.

8. Système pour verrouiller et recouvrir les chariots d'achat (30) qui sont ouverts vers le haut selon l'une quelconque des revendications 1 à 7, **caractérisé en ce que** les moyens pour verrouiller la deuxième partie (6) dans une position donnée peuvent être activés et désactivés par l'intermédiaire d'une unité électronique avec un clavier (10).

9. Système pour verrouiller et recouvrir les chariots d'achat (30) qui sont ouverts vers le haut selon la revendication 8, **caractérisé en ce que** la deuxième partie (6) comprend une bride (15), d'une part servant de poignée et, de l'autre, servant de couvercle du clavier (10).

10. Système pour verrouiller et les chariots d'achat (30) qui sont ouverts vers le haut selon les revendications 8 ou 9, **caractérisé en ce que** le moyen pour la deuxième partie (6) dans une position donnée comprend un mécanisme temporisé pour libération.

11. Système pour verrouiller et recouvrir les chariots d'achat (30) qui sont ouverts vers le haut selon l'une quelconque des revendications 1 à 10, **caractérisé en ce que** la première partie (5) des fibres électriquement conductrices, en particulier des fibres de matières plastiques et électriquement conductrices.

12. Système pour verrouiller et recouvrir les chariots d'achat (30) qui sont ouverts vers le haut selon l'une quelconque des revendications 5 à 11, **caractérisé en ce que** le tissu de la deuxième partie (6) comprend des fibres électriquement conductrices, en particulier des fibres de matières plastiques et électriquement conductrices.

13. Système pour verrouiller et recouvrir les chariots d'achat (30) qui sont ouverts vers le haut selon l'une quelconque des revendications 5 à 11, **caractérisé en ce que** la première partie (5) et la deuxième partie (6) comprennent un tissu avec des fibres électriquement conductrices incorporées, en des fibres de matières plastiques et électriquement conductrices.

14. Système pour verrouiller et recouvrir les chariots d'achat (30) qui sont ouverts vers le haut selon l'une quelconque des revendications 5 à 11, **caractérisé en ce que** la première partie (5) et la deuxième partie (6) sont montées de manière détachable sur le montant (20).
